Europäisches Patentamt

European Patent Office

Office européen des brevets

(19)

(11) Veröffentlichungsnummer: **0 257 494 B1**

# EUROPÄISCHE PATENTSCHRIFT

(45) Veröffentlichungstag der Patentschrift: **24.04.91**

(51) Int. Cl.5: **E04H 6/00**

(21) Anmeldenummer: **87111838.6**

(22) Anmeldetag: **15.08.87**

(54) **Bauteilsatz aus abschliessbaren Boxen zur Herstellung von Einstellräumen für Zweiräder.**

(30) Priorität: **18.08.86 DE 8622093 U**

(43) Veröffentlichungstag der Anmeldung:
**02.03.88 Patentblatt 88/09**

(45) Bekanntmachung des Hinweises auf die
Patenterteilung:
**24.04.91 Patentblatt 91/17**

(84) Benannte Vertragsstaaten:
**BE DE FR NL**

(56) Entgegenhaltungen:
**DE-A- 2 633 400**
**FR-A- 2 114 595**
**FR-A- 2 449 765**
**US-A- 3 967 425**
**US-A- 4 156 994**

(73) Patentinhaber: **Tellmann, Rolf**
**Fontanestrasse 10**
**W-4050 Mönchengladbach 4(DE)**

(72) Erfinder: **Tellmann, Rolf**
**Fontanestrasse 10**
**W-4050 Mönchengladbach 4(DE)**

(74) Vertreter: **Andrejewski, Walter et al**
**Patentanwälte Andrejewski, Honke & Partner**
**Postfach 10 02 54 Theaterplatz 3**
**W-4300 Essen 1(DE)**

EP 0 257 494 B1

## Beschreibung

Die Erfindung betrifft einen Bauteilsatz aus im Grundriß dreieckförmigen, mit entsprechendem Bodenteil ausgerüsteten Boxen für Zweiräder, wobei die Boxen in selbsttragender Rahmenkonstruktion ausgeführt sowie mit Seitenwänden und einer unter Schwerkrafteinfluß schließenden Tür ausgerüstet und zu einem reihenförmigen oder zu einem im Grundriß vieleckigen Einstellraum zusammensetzbar sind, wobei eine hakenförmige Aufnahmeeinrichtung zur Aufnahme eines Zweiradlenkers und eine keilförmig gestaltete Klemmeinrichtung für das Vorderrad des Zweirades vorgesehen sind. - Um der Gefahr von Diebstahl oder Beschädigung vorzubeugen, werden oft Boxen für das Einstellen von Zweirädern, insbesondere von Fahrrädern, benötigt. Die Boxen können vor allem an öffentlichen Einreichungen wie Schulen, Schwimmbädern, Bahnhöfen und Sportanlagen sowie an Wohnanlagen oder Firmenparkplätzen eingesetzt werden. Sie sind an die örtlichen Gegebenheiten anpaßbar. Es können reihenförmige oder vieleckförmige gekrümmte Einstellräume aus dem Bauteilsatz erstellt werden. Die einzelnen Boxen benötigen nur wenig Platz . Sie bieten dem Benutzer die Möglichkeit , zusätzliche, nicht fest mit dem Zweirad verbundene Gegenstände einzuschließen.

Bei dem bekannten Bauteilsatz (FR-A 24 49 765), von dem die Erfindung ausgeht, ist die unter Schwerkrafteinfluß schließende Tür um eine horizontale Achse bewegbar. Die horizontale Achse ist an gekrümmten Rahmenstäben der Rahmenkonstruktion befestigt. Die hakenförmige Aufnahmevorrichtung und die Klemmeinrichtung sind mit der Tür verbunden. - Bei offener Tür ist das untere Ende der Tür für große Personen oftmals hinderlich. Die Tür darf nicht zu hoch angeordnet werden, um die Benutzung auch kleinen Personen, insbesondere Kindern, zu ermöglichen. Beim Öffnen und Schließen der Tür ist die Handhabung erschwert, da das Zweirad mit der Tür über die hakenförmige Aufnahmeeinrichtung und die Klemmeinrichtung in direkter Verbindung steht . Beim Öffnen und Schließen der Tür sind deshalb verhältnismäßig große Massen zu bewegen. Das Öffnen und Schließen der Tür verlangt entsprechend große Bedienungskräfte in vertikaler Richtung. Der Abstand der Klemmeinrichtung zur Aufnahmeeinrichtung ist starr, da beide Teile mit der Tür verbunden sind. Unterschiedliche Abstände zwischen Lenker und Vorderrad von Zweirädern führen zu Problemen bei der Benutzung der Boxen.

Der Erfindung liegt die Aufgabe zugrunde, den Bauteilsatz in fertigungsmäßiger Hinsicht zu vereinfachen und gleichzeitig so einzurichten, daß die in den Boxen unterzubringenden Zweiräder auf einfache Weise und bequem gehandhabt werden können.

Zur Lösung dieser Aufgabe lehrt die Erfindung, daß die Boxen vertikale und horizontale gerade Rahmenstäbe ein dem Grundriß entsprechendes Deckenteil und jeweils eine durch an einen vertikalen Rahmenstab angeschlossene Scharniere mit abgeschrägter Auflage- und Drehfläche selbsttätig schließende Tür aufweisen, daß die Aufnahmeeinrichtung eine Schwinge mit Haken ist, die oberhalb der Türöffnung quer zur Ebene der Tür schwenkbar gehalten ist, und daß die Klemmeinrichtung im rückwärtigen Innenbereich der Boxen angeordnet ist.

Die Erfindung erreicht wesentliche Vorteile: Die geraden Rahmenteile, die in vertikaler und in horizontaler Richtung angeordnet sind, müssen nur auf Länge zugeschnitten werden. Eine aufwendige Bearbeitung kann entfallen. Insbesondere müssen die Rahmenteile nicht gebogen werden. So können mit dem erfindungsgemäßen Bauteilsatz auf sehr einfache Weise in der Größe variierende Boxen erstellt werden. Die Tür der Boxen ist um eine vertikale Achse schwenkbar. Insoweit kann der Benutzer die Tür in vertrauter Weise handhaben. Die Scharniere der Tür sind mit abgeschrägter Auflage- und Drehfläche versehen, wodurch die Tür unter Schwerkrafteinfluß selbsttätig schließt. Türscharniere mit schräger Auflage- und Drehfläche sind bekannt (vgl. DE-OS 26 33 400). Die Schwinge der Aufnahmeeinrichtung ist von der Tür und der Bewegung weitgehend unabhängig. Dieses erleichtert das Einhängen des Zweirades. Das Zweirad kann vom Benutzer unter Verschwenken der Schwinge in die Box hineingeschoben werden, bis sich das Hinterrad innerhalb des Bodenbereiches der Box befindet. Das Zweirad kann fernerhin vom Benutzer so weit in die Box geschoben werden, bis das Vorderrad in die Klemmeinrichtung faßt.

Im folgenden wird die Erfindung anhand einer lediglich ein Ausführungsbeispiel darstellenden Zeichnung ausführlicher erläutert. Es zeigen in schematischer Darstellung

Fig. 1 den grundsätzlichen Aufbau einer erfindungsgemäßen Box, perspektivisch dargestellt,

Fig. 2 eine Dachanordnung für den Gegenstand der Fig. 1,

Fig. 3 eine Türbefestigung,

Fig. 4 eine Ansicht der Aufnahmeeinrichtung, gesehen aus der Pfeilrichtung A in Fig. 3,

Fig. 5 den Aufbau eines Scharnieres mit Selbstschließungseffekt,

Fig. 6a, b, c den Einschiebevorgang eines Fahrrades,

Fig. 7 einen aus den Boxen hergestellten ersten Einstellraum, in der Draufsicht,

Fig. 8 einen aus den Boxen hergestellten zweiten Einstellraum, ebenfalls in der Draufsicht.

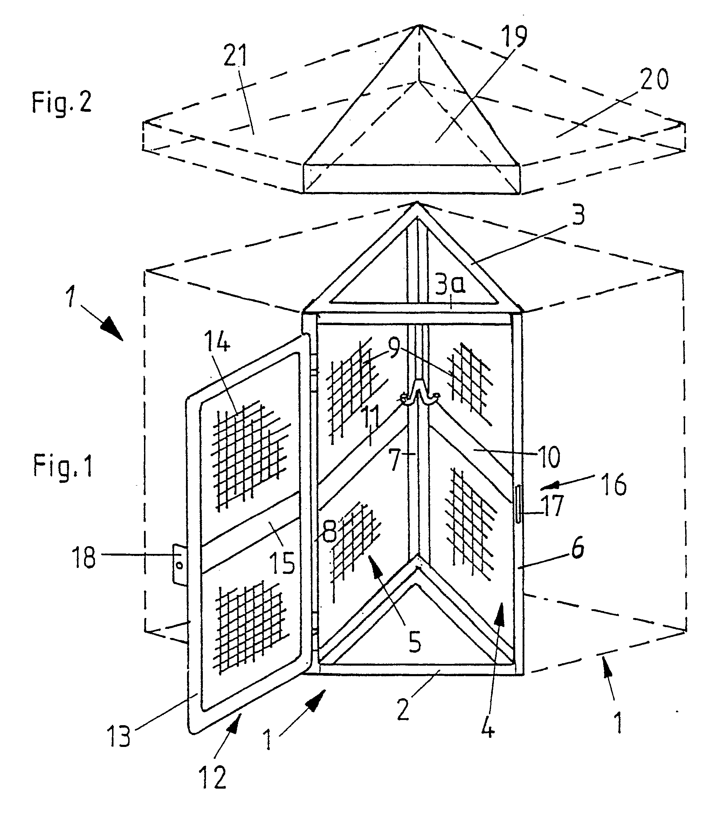

Die Erfindung betrifft einen Bauteilsatz aus abschließbaren Boxen zur Herstellung von Einstellräumen für Zweiräder, insbesondere für Fahrräder. Die Fig. 1 zeigt den grundsätzlichen Aufbau der die Einstellräume bildenden Boxen 1. Die Boxen 1 sind einheitlich ausgebildet und weisen bei geschlossener Tür im wesentlichen die Form eines aufrecht stehenden, geraden und dreiseitigen Prismas auf. Die Box 1 hat ein dreieckig ausgebildetes Bodenteil 2 sowie ein dreieckig ausgebildetes Deckenteil 3, die über Seitenwände 4, 5 miteinander verbunden sind. Aus einer vergleichenden Betrachtung der Figuren erkennt man, daß das Bodenteil 2 die Außenform eines gleichschenkligen Dreiecks aufweist, wobei die feststehenden Seitenwände 4, 5 an den gleichlangen Schenkeln angeschlossen sind. Insbesondere aus einer vergleichenden Betrachtung der Fig. 1, 7 und 8 erkennt man fernerhin, daß die Boxen 1 an den Seitenwänden 4, 5 zu einem reihenförmigen oder bogenförmig gekrümmten Einstellraum 100 verbindbar sind.

Die im Ausführungsbeispiel dargestellten Boxen 1 sind in selbsttragender Rahmenbauweise mit rahmenförmigem Bodenteil 2 und rahmenförmigem Deckenteil 3 sowie mit seitenwandbegrenzenden Streben 6, 7, 8 ausgebildet. die an ihrem unteren und oberen Ende jeweils mit dem Bodenteil 2 bzw. Deckenteil 3 verbunden sind. Die Seitenwände 4, 5 der Boxen weisen eine Auskleidung 9 aus Drahtgitter auf. Zur Verstärkung des Drahtgitters 9 sind Mittelstreben 10 , 11 vorgesehen . Die Boxen 1 sind an den vertikalen Streben 6, 7, 8 unter Einschluß des Drahtgitters 9 miteinander verschraubt. Wenn sich an eine Seitenwand 4, 5 keine weitere Box 1 anschließt, wird das Drahtgitter 9 mit einem (nicht dargestellten) Blendrahmen gehalten.

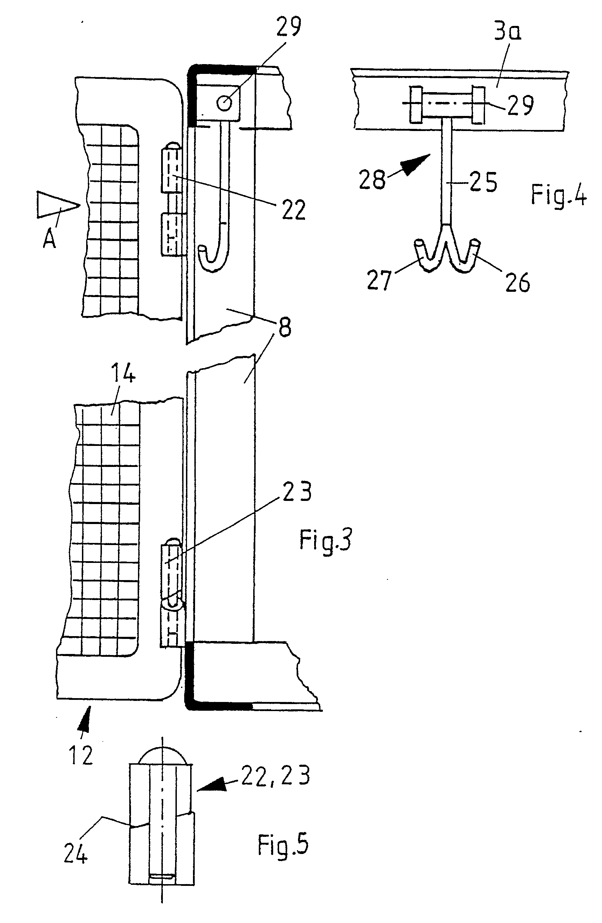

Jede Box 1 weist eine Tür 12 auf, die einen Türrahmen 13 mit einer Auskleidung 14 aus Drahtgitter aufweist. Auch hier ist zur Verstärkung eine Mittelstrebe 15 vorgesehen. Eine an der Tür 12 vorgesehene Verschließeinrichtung 16 ist mit Laschen 17, 18 ausgebildet. Die Lasche 17 ist an der Strebe 7 und die Lasche 18 an der Tür 12 angebracht. Die Laschen 17, 18 sind mit Bohrungen versehen, die in Schließstellung einander gegenüberliegen, so daß ein Vorhängeschloß einführbar ist. Auf die zu einem Einstellraum verbundenen Boxen 1 sind Dächer 19, 20, 21 aufsetzbar, die im Ausführungsbeispiel verschraubt sein mögen. Den Fig. 3 und 5 entnimmt man schließlich, daß an der Tür 12 und der vertikalen Strebe 8 Scharniere 22, 23 mit Selbstschließungseffekt angeordnet sind. Die Scharniere weisen hierzu schräge Auflage- und Drehflächen 24 auf. Damit wird erreicht, daß die Tür stets selbsttätig in Schließstellung gelangt. Die Aufnahmeeinrichtung 28 weist eine Schwinge 25 mit Haken 26, 27 zur Aufnahme eines Zweiradlenkers sowie eine keilförmige gestaltete Klemmeinrichtung (nicht dargestellt) für das Vorderrad auf.

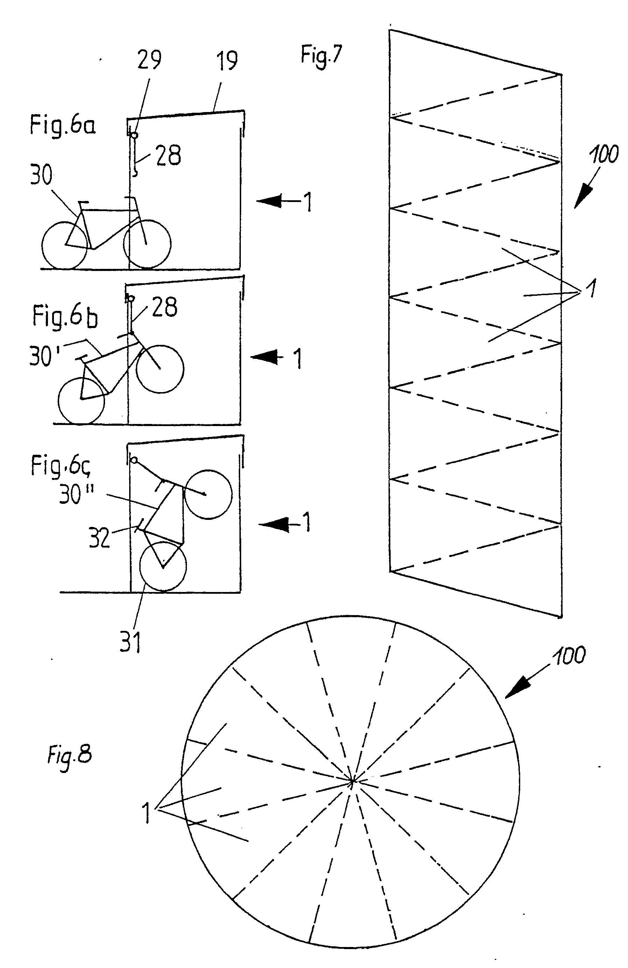

Die Schwinge 25 ist oberhalb der Türöffnung an der vorderen Strebe 3a des Dekkenteils 3 um eine Achse 29 verschwenkbar gehalten. Die Klemmeinrichtung , vorzugsweise eine Führungsschiene, befindet sich im rückwärtigen Innenbereich der Box 1. Die Fig. 6a bis 6c verdeutlichen das Einbringen des Zweirades in die Box 1. Das Zweirad, beispielsweise ein Fahrrad, wird bei geöffneter Tür 12 zunächst in den Innenbereich der Box 1 hineingefahren. Dann wird das Fahrrad 30 angehoben und am Lenker in die Aufnahmeeinrichtung 28 eingehängt (Stellung 30' gemäß Fig. 6b). Anschließend wird das Fahrrad weiter eingeschoben, bis das Hinterrad 31 an der Innenseite des Bodenrahmens 2 anliegt. Schließlich wird die Tür geschlossen. Dabei drückt die Tür 12 mit der Mittelstrebe 15 gegen den Sattel des Fahrrades, so daß das Fahrrad bei geschlossener Tür 12 die in Fig. 6c dargestellte Position 30'' einnimmt. Beim Öffnen der Tür 12 schwenkt das Fahrrad selbsttätig in die in Fig. 6b gezeigte Position 30' zurück und kann dann problemlos entnommen werden.

Der erfindungsgemäße Bausatz aus abschließbaren Boxen dient zur Herstellung von Einstellräumen 100 für Zweiräder. Die Fig. 7 und 8 zeigen Ausführungsbeispiele von erfindungsgemäß herstellbaren Einstellräumen. Die Fig. 7 zeigt einen reihenförmigen Einstellraum 100, der von gegenüberliegenden Seiten aus zugänglich ist . Fig. 8 zeigt einen Einstellraum 100 in freistehender Rundbauweise. Wie aus der Fig. 8 ersichtlich, sind hier zwölf Boxen unter Bildung eines Vollkreises zusammengeschlossen. Die Seitenwände einer jeden Box schließen somit einen Winkel von 30° ein. Diese Ausführungsform hat sich vor allem für Fahrradeinstellräume bewährt. Es ist ohne weiteres verständlich, daß sich die Boxen 1 auch zu halbkreisförmigen Einstellräumen für den Wandanbau oder viertelkreisförmigen Anordnungen für den Eckeneinbau verbinden lassen. Viele weitere Boxenanordnungen sind möglich, so daß eine individuelle Platzausnutzung entsprechend den jeweiligen Gegebenheiten erfolgen kann.

**Ansprüche**

1. Bauteilsatz aus im Grundriß dreieckförmigen, mit entsprechendem Boden teil (2) ausgerüsteten Boxen (1) für Zweiräder (30), wobei die Boxen (1) in selbsttragender Rahmenkonstruktion ausgeführt sowie mit Seitenwänden (4, 5) und einer unter Schwerkrafteinfluß schließenden Tür (12) ausgerüstet und zu einem reihenförmigen oder zu einem im Grundriß vieleckigen Einstellraum (100) zusammensetzbar sind, wobei eine hakenförmige Aufnahmeeinrichtung (28) zur Aufnahme eines Zweiradlenkers und eine keilförmig gestaltete Klemmeinrichtung für das Vorderrad des Zweirades (30) vorgesehen sind, **dadurch gekennzeichnet,** daß die Boxen (1) vertikale und horizontale gerade Rahmenstäbe (6, 7, 8, 2, 3a) ein dem Grundriß entsprechendes Deckenteil (3) und jeweils eine durch an einen vertikalen Rahmenstab (8) angeschlossene Scharniere (22, 23) mit abgeschrägter Auflageund Drehfläche (24) selbsttätig schließende Tür (12) aufweisen, daß die Aufnahmeeinrichtung ( 28 ) eine Schwinge ( 25 ) mit Haken (26, 27) ist, die oberhalb der Türöffnung quer zur Ebene der Tür (12) schwenkbar gehalten ist, und daß die Klemmeinrichtung im rückwärtigen Innenbereich der Box (1) angeordnet ist.

## Claims

1.  An assembly of boxes (1) for bicycles (30), the boxes being in plan triangular and having a corresponding base (2) and being of self-supporting frame construction and having side walls (4, 5) and a door (12) closable by gravity, the boxes being adapted to be assembled to provide a storage zone (100) in row or polygonal form, hook means (28) being provided to receive a bicycle handlebar and wedge-shaped clamping means being provided to receive the front wheel of the bicycle (30), characterised in that the boxes (1) have vertical and horizontal straight frame bars (6, 7, 8, 2, 3a), a top covering member (3) corresponding to the plan and a door (12) closable automatically by rising butt hinges (22, 23) connected to a vertical frame bar (8), the hook means (28) are in the form of a pivoted member (25) wliich has hooks (26, 27) and which is mounted above the door aperture for pivoting transversely to the plane of the door (12), and the clamping means are disposed at the rear of the box interior.

## Revendications

1.  Unité de construction formée par des boxes (1) possédant un contour triangulaire en projection horizontale, équipés d'un élément de sol correspondant (2) et servant à loger des deux-roues (30), et dans laquelle les boxes (1) sont réalisés sous la forme d'une construction formée d'une structure autoportante et sont équipés de parois latérales (4,5) et d'une porte (12) se fermant sous l'action de la force de pesanteur et peuvent être réunis pour former un espace de rangement (100) sous la forme d'une rangée ou possédant un contour polygonal en projection horizontale, et il est prévu un dispositif de réception (28) en forme de crochet servant à recevoir un guidon de deux-roues, et un dispositif de serrage agencé sous la forme d'un coin, servant à serrer la roue avant du deux-roues (30), caractérisée en ce que les boxes (1) comportent des barres rectilignes verticales et horizontales d'encadrement (6,7,8,2,3a), une partie formant plafond (3) correspondant au contour en projection horizontale et respectivement une porte (12) qui se ferme automatiquement au moyen de charnières (22,23), qui sont raccordées à une barre verticale d'encadrement (8) et comportent une surface biseautée de support et de rotation (24), que le dispositif de réception (28) est constitué par un bras oscillant (25) comportant des crochets (26,27) et maintenu de manière à pouvoir pivoter, au-dessus de l'ouverture de la porte (12), transversalement par rapport au plan de la porte, et que le dispositif de serrage est disposé dans la partie intérieure arrière des boxes (1).

EP 0 257 494 B1

Fig. 2

Fig. 1

5

29

3a

29

22

28 25 Fig.4

A

27 26

8

14

23

Fig.3

8

12

22,23

24

Fig.5

Fig.6a

29    19    Fig.7

28

30

◀— 1

100

Fig.6b    28

30'

◀— 1

1

Fig.6c

30"

32

◀— 1

31

100

Fig.8

1